# EUROPEAN PATENT APPLICATION

(11) **EP 1 096 187 A2**
(43) Date of publication of application: **02.05.2001**
(21) Application number: 00850176.9
(22) Date of filing: 25.10.2000
(51) Int. Cl.: F16J 15/32

(54) **Cassette sealing and method for manufacturing such sealing**

(30) Priority: 01.11.1999 SV 9903952
(71) Applicant: Forsheda AB, S-330 12 Forsheda (SE)
(72) Inventor: Jörnhagen, Lennart, 33131 Värnamo (SE)
(74) Representative: Avellan-Hultman, Olle

(57) **Abstract**

Cassette sealing for a shaft (13) extending through the sealing, where either the sealing can rotate around a stationary shaft or the shaft rotate with respect to a stationary sealing, which sealing is intended to seal a room containing a medium, particularly oil, and to prevent intrusion of moisture, dust, soil particles etc., said cassette sealing comprising a sealing element (2-4), which is enclosed in an inner frame or an outer frame (8b), whereby the frame (8b) has a fist lateral end (10) forming a pre-shaped bottom, against which the sealing element (2-4) is bearing, a cylinder shaped inside or outside (9b) and a second lateral end (11), which is formed by a large number of free tongues (15), which are folded outwards or inwards in a radial direction to form this second lateral end (11).

The invention also relates to a method for manufacturing a cassette sealing of the type mentioned above.

## Description

Generally this invention relates to a cassette sealing comprising a sealing ring made of some elastomer material, which is formed for sealing a room containing a medium, particularly liquid such as oil, which room is to be protected against intrusion of water, dust, soil particles etc., and which is held in place by an inner component or an exterior component made of some strong material, usually steel, and which can rotate together with a shaft, which extends axially through the sealing, or where a shaft extending through the sealing is arranged to rotate in the sealing, which is fixed.

### Technical problem, prior art

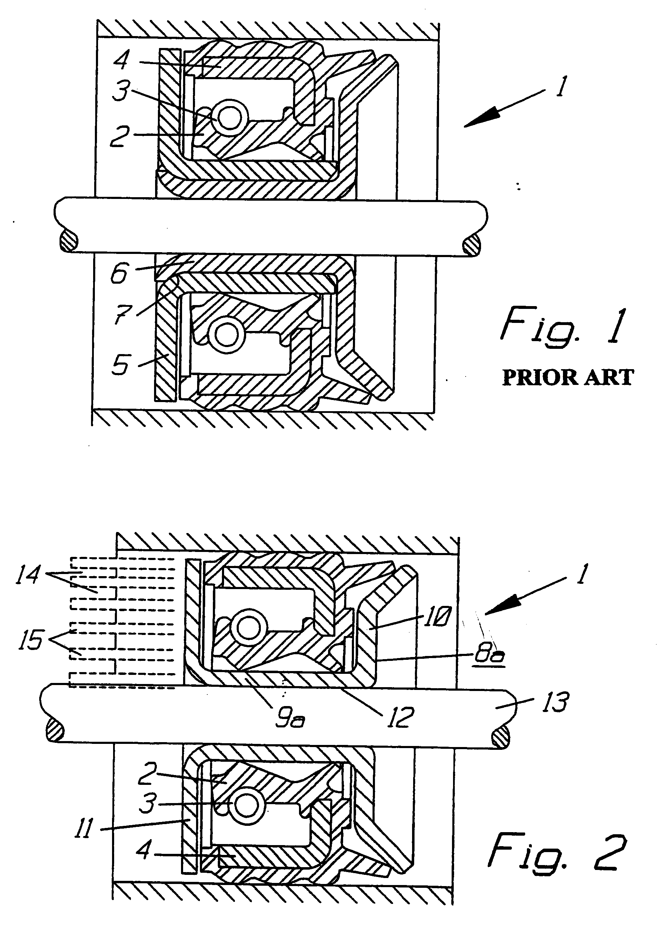

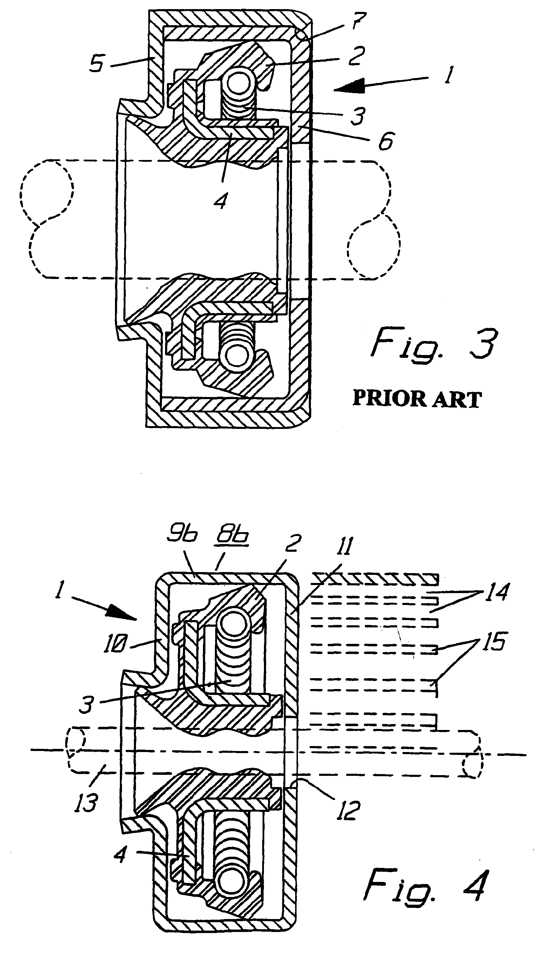

It is important that the sealing ring is accommodated in and held in place by an inner or outer frame, which can be fixed in relation to one of the two components, which delimit the sealed room, e.g. a shaft or a wheel hub. Cassette sealings of the type mentioned above are known in many different embodiments, and in the accompanying figure 1 there is shown a typical example of such a prior art cassette sealing, which is arranged to be fixed on a stationary shaft, and which comprises two components joined with each other from each side of the sealing ring, in the example shown by means of a clamping joint, or else by some sort of screw joint or threaded joint. In a similar way figure 3 shows a prior art cassette sealing with an outer frame consisting of two components, which have been joined with each other from each side of the sealing ring, and there the sealing is fixed in the outer frame an a shaft is arranged to be able to rotate inside the sealing.

Such two piece outer frames are relatively complicated and expensive to manufacture and assemble, inter alia because the inner and outer frame components, respectively, must have fitting tolerances both on their inside and outside, where that frame component shall be mounted with force fit on the shaft or in a hub, respectively. Therefore a cassette sealing of said type has been desired, which can be manufactured and assembled in an easier and less expensive way, particularly a cassette sealing where the inner frame or the outer frame are made in one single continuous piece.

### The invention

According to the invention this is achieved by punching the inner or outer frame, respectively, to cup shape with a through bottom hole for a shaft, and by forming the innermost or outermost part, respectively, of the cup edges with a number of slot shaped punched portions, which, after introduction of an elastomer sealing component against the bottom of the cup shaped frame, are bent inwards against the open side of the elastomer sealing, so that it is held in place within the outer frame, which is made in one continuous piece.

### Brief description of the drawings

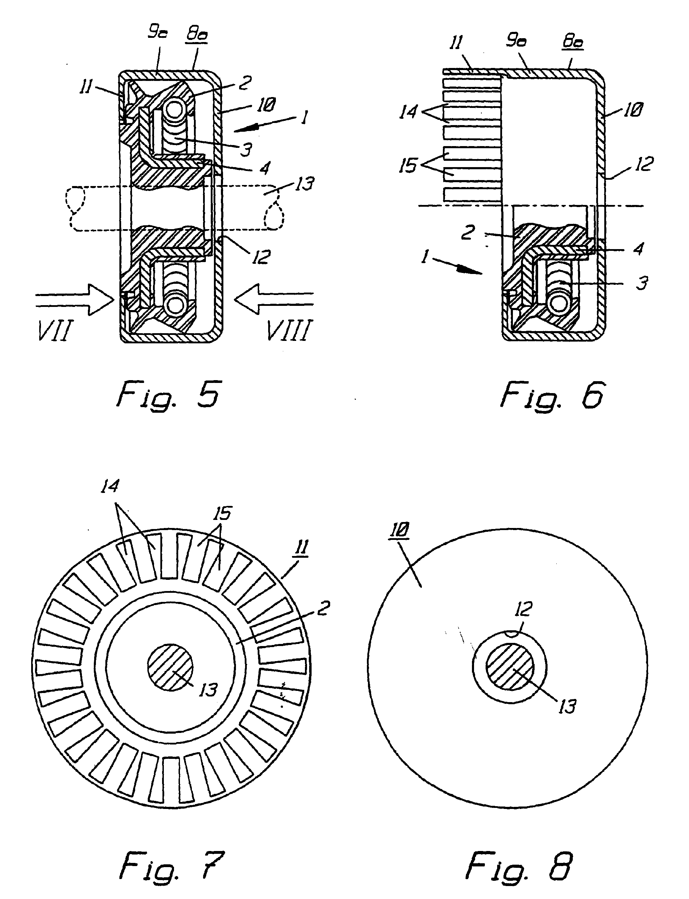

The invention will now be described more in detail with reference to the accompanying drawings. In the drawings figure 1 shows an axial section through a type of prior art cassette sealing for fixed installation on a shaft. Figure 2 shows in a similar manner an axial section through a cassette sealing according to the invention together with a manufacturing detail, which is partially shown with broken lines in the drawing. Figure 3 shows in a similar manner as figure 1 an axial section through a prior art type of cassette sealing for mounting with force fit in a hub, and figure 4 shows a cassette sealing according to the invention in a similar manner as figure 2. Figure 5 shows a somewhat modified type of cassette sealing according to the invention, and figure 6 shows the same sealing as in figure 5 with a blank for an outer frame shown in the upper half of the figure before the sealing element has been introduced, and a finished cassette sealing is shown in the lower part of the figure. Figure 7 shows an end view of the sealing in figure 5 seen from the left side (arrow VII), and figure 8 shows an end view of the same cassette sealing seen from the right side (arrow VIII) of the sealing.

### Detailed description

The prior art cassette sealing 1 shown in figure 1 is in the customary manner provided with a sealing ring 2 of elastomer material and with a tension spring 3 acting outwards in radial direction, and a reinforcement 4. The sealing unit 2-4 is enclosed in an inner frame consisting of two pieces, i.e. an outer frame portion 5 and an inner frame portion 6, which in the example shown are joined with each other by clamp joint. As has been stated above this manner for manufacturing and assembling a cassette sealing is relatively complicated, time consuming and expensive.

In a similar way figure 3 shows a similar cassette sealing, the outer frame portion of which comprising two units 5 and 6, which are joined with each other by clamping joint.

Figures 2 and 4 show cross sections of two alternative embodiments of a cassette sealing according to the invention, i.e. in figure 2 a cassette sealing for a stationary shaft and a hub, which rotates outside the sealing, and in figure 4 a cassette sealing for a stationary hub and a rotating shaft. The sealing differs from the prior art cassette sealings in that the inner frame 8a and the outer frame 8b, respectively, are made in one continuous piece, but yet enclose the sealing element 2-4 both on the inside and the outside, respectively, of the cassette sealing and on the two end edges 10, 11, respectively.

This is possible by producing the inner frame 8a and the outer frame 8b, respectively from a blank, which is cup shaped in axial direction with an inside 9a and an outside 9b, respectively, an over-folded end or bottom 10 of the cup shaped unit, a slotted portion, which is intended to form an inwards foldable, slotted end 11, and a hole 12 in the over-folded bottom 10 for a through shaft 13.

The slotted end 11 is provided with a large number of punched portions 14, which have rectangular or other shape, and between which there is left freely hanging tongues 15, which are connected with the axial side 9a, 9b of the frame, and which are arranged to be folded, after the introduction of the sealing element 2-4 into the outer frame, outwards or inwards, respectively, to form the slotted end 11 for holding the sealing element 2-4 in place in the frame 8a, 8b. This slotted portion 11 of the cup shaped blank for the frame 8a, 8b can have the same material thickness as the rest of the frame, but in figure 5 it is indicated that the portion 11 with slots 14 and tongues 15 can be somewhat thinner to facilitate punching of the slots 14 and the folding inwards of the tongues 15.

The punched portions can have other shape than the shown rectangular shape, e.g. triangular shape with a triangle tip pointing outwards. It is important that the ends of the inwards folded tongues 15 are located in a continuous plane without contacting each other, so that the end 11 forms a plane unit, as is shown in the figures.

A sealing ring according to the invention is manufactured by separately manufacturing a sealing element 2-4 and a blank for an inner frame 8a or an outer frame 8b, see particularly the upper half of figure 6. The blank for the frames 8a, 8b is pressed into cup shape, and out of the free end of the cup there is punched a number of slots 14 having rectangular or other shape, see the upper half of figure 6. The sealing element 2-4 is introduced into the cup shaped outer frame 8, and the tongues 15 formed by the slots are folded outwards or inwards, respectively, so that they secure the sealing element 2-4 within the frame, see the lower part of figure 6.

To anyone skilled in the art it is obvious that the described embodiments of the invention only are illustrating examples, and that various modifications are possible within the scope of the patent claims below, as far as relating to a cassette sealing where the outer frame is made of a blank in one single continuous piece of material.

### Designation numerals

- 1: cassette sealing
- 2: sealing ring
- 3: tension spring
- 4: reinforcement
- 5: outer frame portion
- 6: inner frame portion
- 7: clamp joint
- 8a: inner frame
- 8b: outer frame
- 9a: inner side
- 9b: outer side
- 10: enclosing end
- 11: slotted end
- 12: shaft hole
- 13: shaft
- 14: punched portion
- 15: tongue

## Claims

1. Cassette sealing for a shaft (13) extending through the sealing, which is intended to seal a room containing a medium, particularly oil, and to prevent intrusion of moisture, dust, soil particles etc., said cassette sealing comprising a sealing element (2-4), which is enclosed in an inner frame (Ba) or an outer frame (8b), ***characterized in,*** that the frame (8a; 8b) has a fist lateral end (10) forming a bottom, against which the sealing element (2-4) is bearing, and a second lateral end (11), which is formed by a large number of tongues (15), which hang freely against a cylinder shaped side (9a; 9b), and which are folded outwards or inwards in a radial direction to form this second lateral end (11).

2. Cassette sealing according to claim 1, ***characterized in,*** that the tongues (15) in the second lateral end (11) are formed by punching (14) a number of material portions out of a cylinder shaped portion (9) of a blank for an outer frame.

3. Cassette sealing according to claim 2, ***characterized in,*** that the punched portions (14) are rectangular.

4. Cassette sealing according to claim 2, ***characterized in,*** that that the punched portions (14) are triangle shaped having a tip of the triangle pointing outwards.

5. Cassette sealing according to claim 2, 3 or 4, ***characterized in***, that the punched portions (14) have such dimensions and are formed and mutually distributed in such a manner, that the tongues (15) after having been folded, are positioned in a uniform plane without contacting each other.

6. Method for manufacturing a cassette sealing for a shaft (13) extending axially through the sealing, which is intended to seal a room containing a medium, particularly oil, and to prevent intrusion of moisture, dust, soil particles etc., said cassette sealing comprising a sealing element (2-4), which is enclosed in an inner frame (8a) or an outer frame (8b), ***characterized in*,**
- that separately there is manufactured a sealing element (2) and a blank for an inner frame (8a) or outer frame (8b) having the shape of a cup with sides (9), which blank is provided with a bottom (10) with a hole (12) for a trough shaft (13), a cylinder shaped side (9) and an inwards foldable edge intended to form an end (11) opposite to the bottom (10) of the outer frame (8);
- that the inwards foldable edge (11) is provided with a number of punched portions (14) extending some distance inwards towards the bottom end (10) corresponding to the axial length of the sealing element (2-4), while inwards foldable tongues (15) are left;
- that the sealing element (2-4) is introduced towards the bottom (10) in the blank for outer frame (8) ;
- that the tongues (15) are folded outwards or inwards, respectively, to form an end (11) in the inner frame (8a) or the outer frame (8b) while holding the sealing element (2-4) in position.

7. Method according to claim 6, ***characterized in***, that the punched portions (14) have rectangular shape, triangular shape or some other shape and have such width, form and mutual distribution, that the edges of the inwards folded tongues (15) are positioned in a uniform plane without contacting each other.

8. Method according to claim 5 or 6, ***characterized in*,** that the inwards foldable edge (11) of the cylindrical inside (9a) or outside (9b), respectively, on the outer frame (8) have less thickness of material than the remaining portion of the frame (8a; 8b).
